# EUROPÄISCHE PATENTSCHRIFT

(11) **EP 0 392 245 B1**
(45) Veröffentlichungstag und Bekanntmachung des Hinweises auf die Patenterteilung: **28.12.1994**
(21) Anmeldenummer: 90105713.3
(22) Anmeldetag: 26.03.1990
(51) Int. Cl.: H04B 17/02, H04B 3/46

(54) **Automatische Adressierung von zur Überwachung und/oder Steuerung in einem digitalen Nachrichtenübertragungssystem enthaltene Prozessoreinheiten**
Automatic addressing of monitoring and/or control processing units comprised in a digital information transmission system
Adressage automatique d'unités de traitement d'un système numérique de transmission d'informations en assurant la surveillance et/ou la commande

(30) Priorität: 13.04.1989 DE 3912182
(43) Veröffentlichungstag der Anmeldung: 17.10.1990
(73) Patentinhaber: SIEMENS AKTIENGESELLSCHAFT, 80333 München (DE)
(72) Erfinder: Narjes, Ferdinand,, D-8000 München 70 (DE); Weimert, Günter, Dipl.-Ing., D-8000 München 71 (DE)

(56) Entgegenhaltungen:
- EP-A- 0 143 489
- EP-A- 0 215 437
- EP-A- 0 348 810

## Beschreibung

### Automatische Adressierung von zur Überwachung und/oder Steuerung in einem digitalen Nachrichtenübertragungssystem enthaltene Prozessoreinheiten

Die Erfindung betrifft ein Verfahren entsprechend dem Anspruch 1.

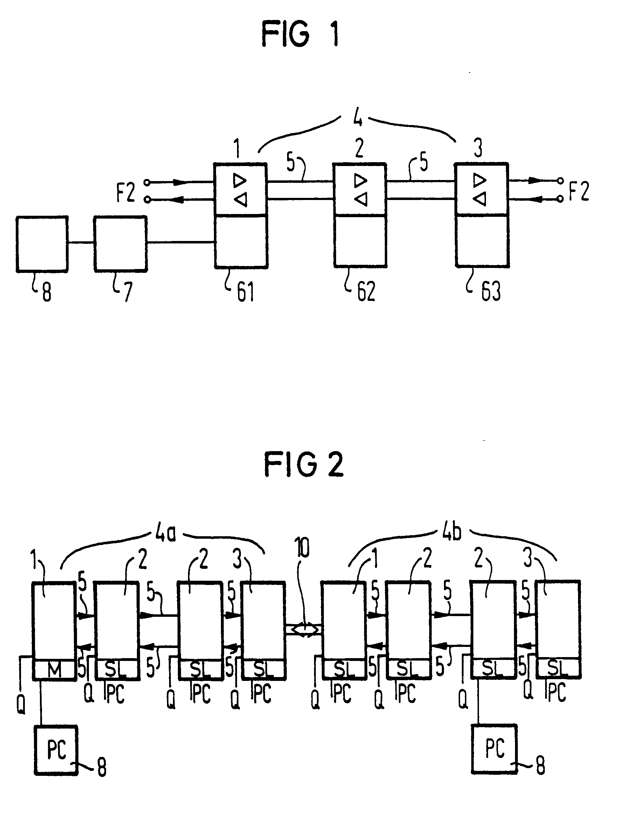

Digitale Nachrichtenübertragungssysteme enthalten entsprechend der Fig.1 Leitungsendgeräte 1 und 3, zwischen denen ein oder mehrere Zwischenregeneratoren 2 angeordnet sind, die über Lichtwellenleiter 5 oder Koaxialkabel miteinander verbunden sind. In den Leitungsendgeräten 1 und 3 sowie den Zwischenregeneratoren 2 sind Fehlererkennungseinrichtungen enthalten, die beispielsweise Verletzungen der laufenden digitalen Summe oder anderer Eigenschaften des verwendeten Kodierungsverfahrens feststellen und an unmittelbar angeschlossene Prozessoreinheiten 61, 62, 63 abgeben. Über eine besondere Verbindung oder über einen zusätzlichen Nachrichtenkanal im digitalen Nutzsignal werden die Fehlermeldungen der einzelnen Prozessoreinheiten zu einer zentralen Stelle übermittelt und von dieser entsprechend ausgewertet.

Ein Verfahren zur In-Betrieb-Überwachung einer Nachrichtenübertragungseinrichtung, bei der Nutzsignale über eine elektrooptische Übertragungsstecke und die Überwachungsinformationen der Prozessoreinheiten als Telemetriesignale über einen Hilfskanal übertragen werden, ist bereits aus: Ewald Braun und Erhart Steiner "Überwachung und zusätzliche Dienste der Digitalübertragungssysteme für Lichtwellenleiter", telcom report, 10, 1987, Spezial, "Multiplex- und Leitungseinrichtungen", Seiten 109 bis 114 bekannt. Das bekannte Verfahren verwendet adressenfreie Telemetrietelegramme, sodaß die in den Leitungsendgeräten und Zwischenregeneratoren eines Grundleitungsabschnittes vorgesehenen Prozessoreinheiten nicht adressiert werden. Ein derartiges adressenfreies Verfahren ist sehr flexibel, weist jedoch den Nachteil auf, daß nicht einzelne bestimmte Prozessoreinheiten aufgerufen und abgefragt werden können. Das auch als "Polling" bezeichnete Verfahren zum Aufruf einer auch als Slave bezeichneten Unterstation von einer auch als Master bezeichneten Hauptstation aus, setzt eine Adressierung der einzelnen Stationen voraus. Eine derartige Adressierung ist bereits in der am 5/9/90 veröffentlichten EP-A- 385 126 beschrieben. Bei einem derartigen Adressierungsverfahren kann eine Prozessoreinheit als Master und die anderen Prozessoreinheiten als Slave eingestellt werden, es können auch sämtliche Prozessoreinheiten als Slave eingestellt werden, dann ist aber einer dieser Prozessorheiten, beispielsweise der Prozessoreinheit 61 ein zusätzliches Ortungsmodul 7 zuzuordnen, das die Funktionen eines Masters erfüllt und mit einem Personal Computer 8 seinerseits verbunden ist.

Bei der Neuinstallation einer derartigen digitalen Übertragungsstrecke mit ihren Überwachungseinrichtungen oder bei einer Reparatur besteht die Notwendigkeit, die einzelnen Prozessoreinheiten vom Master ausgehend zu adressieren. Da die als Master bezeichnete Prozessoreinheit in der Regel einem Leitungsendgerät zugeordnet ist und damit in einer Endstelle angeordnet ist, besteht das Problem nach der Streckenreparatur von der Strecke aus die Neuadressierung veranlassen zu können. Es ist deshalb erwünscht, die Adressierung von einer als Slave bezeichneten Prozessoreinheit auslösen zu können, die an einer beliebigen Stelle der Übertragungsstrecke angeordnet sein kann. Dabei ergibt sich jedoch die Schwierigkeit, daß zufällig und irrtümlicherweise zwei Prozessoreinheiten als Master eingestellt sind und ein Adressierungswunsch eines Slave dann zu Adressierungen von beiden Mastern aus führen würde.

Aufgabe der Erfindung ist es also, ein automatisches Adressierungsverfahren der eingangs erwähnten Art anzugeben, die eine von einem Slave initiierte Neuadressierung auch dann erlaubt, wenn zwei Master vorhanden sind.

Die Aufgabe der Erfindung wird durch ein Verfahren entsprechend Anspruch 1 gelöst. Von besonderem Vorteil bei der erfindungsgemäßen Lösung ist die Möglichkeit, unmittelbar nach der Reparatur eines Streckengerätes die Strecke mit den Überwachungseinrichtungen wieder in Betrieb nehmen zu können und dabei das reparierte Streckengerät im Betrieb weiter überprüfen zu können, ohne daß zusätzliche Verbindungen zu den Streckenendgeräten hergestellt werden müßten.

Die im Patentanspruch 3 beschriebene bevorzugte Weiterbildung des erfindungsgemäßen Verfahrens ermöglicht die Auslösung einer automatischen Adressierung auch dann, wenn zufällig von dem initiierenden Slave aus gesehen, zwei Master in der gleichen Übertragungsrichtung angeordnet sind.

Die Erfindung soll im folgenden anhand eines in der Zeichnung dargestellten Ausführungsbeispiels näher erläutert werden. In der Zeichnung zeigt
- Fig.1: einen Digitalsignal-Grundleitungsabschnitt nach dem Stande der Technik und
- Fig.2: zwei in Kette geschaltete Digitalsignal-Grundleitungsabschnitte mit jeweils zwei Leitungsendgeräten und einem Master.

Die Fig.1 ist bei der Erläuterung des Standes der Technik bereits ausreichend erklärt worden, sodaß an dieser Stelle nicht weiter darauf eingegangen wird.

In der Fig.2 sind zwei im folgenden als Leitungsabschnitte bezeichnete Digitalsignal-Grundleitungsabschnitte 4a, 4b über einen bidirektionalen ISM-Bus 10 miteinander verbunden. Jeder dieser Leitungsabschnitte enthält ein Leitungsendgerät 1 bzw. 3 sowie Zwischenregeneratoren 2, die über Verbindungsleitungen 5 in Form von Lichtwellenleitern miteinander und mit den Leitungsendgeräten verbunden sind. Jedem der Leitungsendgeräte 1, 3 und jedem der Regeneratoren ist eine Prozessoreinheit zugeordnet, wobei die Prozessoreinheit des 1. Leitungsendgerätes 1 des ersten Leitungsabschnittes 4a in den Modus eines Masters M und alle anderen Prozessoreinheiten in den Modus eines Slaves SL geschaltet sind. Für die Auswertung der vom Master übermittelten Überwachungsergebnisse und für Befehlseingaben ist an den Master ein Personalcomputer 8 angeschlossen, der während des gesamten Betriebes mit dem Personalcomputer verbunden bleibt. Auch die in den Slave-Modus geschalteten Prozessoreinheiten verfügen über Anschlüsse für Personalcomputer PC, die jedoch nicht dauernd mit Personalcomputern verbunden sein müssen. Der Personalcomputer 8 kann entfallen, wenn stattdessen mit dem Ausgang des Masters eine entsprechende Auswerteeinheit verbunden ist. Zusätzlich enthalten die mit den Regeneratoren bzw. den Leitungsendgeräten unmittelbar verbundenen Überwachungseinrichtungen einen Ortsanschluß Q, an dem ein Signalsammelsystem angeschlossen sein kann.

Die Digitalsignal-Übertragungsstrecke, zu der die beiden Leitungsabschnitte 4a, 4b gehören, ist Teil einer Übertragungseinrichtung der international genormten synchronen digitalen Hierarchie. Die Leitungsendgeräte können dabei zu synchronen Leitungsmultiplexern erweitert sein, die Zwischenregeneratoren sind synchrone Leitungsregeneratoren. Der Telemetriekanal, über den die einzelnen Slaves mit dem Master verbunden sind, ist in diesem Falle einer der der nationalen Benützung vorbehaltenen Kanäle des sogenannten Overheads des digitalen Übertragungssystems. Am Ende des jeweiligen Leitungsabschnittes wird der Telemetriekanal aus dem Overhead ausgekoppelt und zur ortenden Stelle, also zum Master oder zu einem mit einer Prozessoreinheit verbundenen Ortungsmodul, mittels einer Busleitung ISM-Bus 10 übertragen. Bei einem komplexen digitalen Nachrichtenübertragungssystem bilden die verschiedenen Busleitungen ein Telegrammübertragungsnetz mit einer Struktur entsprechend dem des Hauptnetzes, sodaß das Telegrammübertragungsnetz als Linie mit einem oder mehreren in Kaskade geschalteten Leitungsabschnitten 4 einem Netz mit parallelen Linien oder einem mit Abzweigungen versehenen Sternnetz aufgebaut sein kann.

Gegebenenfalls können über den ISM-Bus Überwachungsdaten zwischen einem Zwischenregenerator und einem abzweigenden Leitungsabschnitt ausgetauscht werden.

Innerhalb eines Leitungsabschnittes 4 werden die Überwachungsdaten der Leitungsendgeräte 1, 3 und der Zwischenregeneratoren 2 von einer Prozessoreinheit zur nächsten Prozessoreinheit z. B. von der Prozessoreinheit 61 zur Prozessoreinheit 62 bzw. umgekehrt jeweils über den Telemetriekanal übertragen.

Innerhalb einer Linie werden die Überwachungsdaten von Leitungsendgerät 1 bzw. 3 zu Leitungsendgerät 3 bzw. 1 gegebenenfalls von einem Leitungsabschnitt zum nächsten Leitungsabschnitt, z. B. vom Leitungsabschnitt 4a zum Leitungsabschnitt 4b oder vom Leitungsabschnitt 4b zum Leitungsabschnitt 4a jeweils über den ISM-Bus der betreffenden Prozessoreinheit übertragen.

Das Überwachungsverfahren ermöglicht es, in einer beidseitig mit einem Leitungsendgerät 1, 3 abgeschlossenen Grundleitung während des Betriebs die Leitungsendgeräte 1, 3 und Zwischenregeneratoren 2 zu überwachen und im Fehlerfall das gestörte Regeneratorfeld einzugrenzen.

Das In-Betrieb-Überwachungsverfahren (In-Service-Monitoring, ISM) arbeitet nach dem Pollingprinzip. Die Abfrage der einzelnen Geräte wird im Regelfall zentral von einem bezüglich der ISM-Einrichtung als Master geschalteten Leitungsendgerät 1, 3 gesteuert, das sich an einem Ende des Ortungsbereichs befindet.

Die Vergabe der Adressen an die einzelnen Geräte erfolgt nach einem automatischen Verfahren.

Die Verbindung zwischen den Leitungsabschnitten 4 erfolgt über einen bidirektionalen Datenbus, den ISM-Bus 10.

Die Abfrage der Überwachungsdaten und gezielte Eingriffe in den Pollingablauf zur Unterstützung der Fehlerortung sind an jedem Leitungsendgerät 1, 3 bzw. Zwischenregenerator 2 durch Anschluß eines Personalcomputers 8 (PC) möglich. Bei Anschluß eines Personalcomputers 8 können die Überwachungsdaten des gesamten Ortungsbereichs ausgewertet und an dessen Bildschirm dargestellt werden.

Über die Schnittstelle Q an dem als Master geschalteten Leitungsendgerät ist die Abfrage von Daten und das Absetzen von Steuerbefehlen in Verbindung mit einem Signalsammelsystem möglich.

Ein Leitungsendgerät 1 wird mit Hilfe eines Kodierschalters oder - über einen an das Gerät angeschlossenen Personalcomputer 8 - per Steuerbefehl als Master oder Slave eingestellt.

Der Master fragt zentral die zu überwachenden Geräte - Zwischenregeneratoren 2 und Leitungsendgeräte 1, 3 - zyklisch mit ihrer Adresse durch Aussenden eines Aufruftelegramms ab.
Innerhalb dieses Zyklus ruft er auch die eigene Station auf und sendet anschließend wie ein Slave die Daten seiner Station aus. Er empfängt die von den aufgerufenen Geräten gesendeten Antworttelegramme, vergleicht die eingehenden Daten mit eingegebenen Schwellwerten und löst bei Überschreiten der Schwellwerte Alarme aus.

Stellt der Master während des Pollzyklus fest, daß er von einem Gerät innerhalb einer Wartezeit von z. B. 0,2 Sekunden nach dem Aufruf keine Antwort empfängt, so setzt er den Pollzyklus mit dem nächsten Gerät fort.

Nach einem Pollzyklus gibt der Master mit einem Telegramm an alle Geräte ein Zeitintervall von z. B. mindestens 0,2 Sekunden frei, in dem der Befehl für eine Neuadressierung abgesetzt werden kann. Meldet sich ein Gerät mit diesem Befehl, so findet die nachstehend beschriebene Adressierung statt. Andernfalls wird der normale Pollzyklus fortgesetzt.

Die minimale Zykluszeit einschließlich des freigegebenen Zeitintervalls nach einem Pollzyklus beträgt z. B. 1,2 Sekunden.

Im Normalbetrieb werden alle an einem Gerät ankommenden Aufruftelegramme und Antworttelegramme direkt zu den Ausgängen durchgeschaltet, um die Zeit für einen Pollzyklus möglichst kurz zu halten.

Im Speicherbetrieb werden alle ankommenden Telegramme der betroffenen Übertragungseinrichtung in dem Gerät zwischengespeichert, auf Fehler untersucht und nur fehlerfreie Telegramme zu den Ausgängen durchgeschaltet.
Die Übertragungsmodi Normalbetrieb und Speicherbetrieb können vom Master aus per Steuerbefehl im Aufruftelegramm in jedem Gerät - getrennt für die beiden Übertragungseinrichtungen - umgeschaltet werden.

Es sind zwei Adressierverfahren der Geräte in einem Ortungsabschnitt möglich, und zwar eine manuelle Adressierung eines Gerätes im Ortungsbereich und eine automatische Adressierung aller Geräte im Ortungsbereich.

Die ISM-Adressen der Leitungsendgeräte 1, 3 und Zwischenregeneratoren 2 setzen sich aus zwei mal acht Bits zusammen, 8 Bits für die Nummer des Leitungsabschnittes 4, in dem das Gerät eingesetzt ist - im folgenden L-Adresse genannt -, und 8 Bits für die Nummer des Gerätes innerhalb eines Leitungsabschnittes 4 - im folgenden G-Adresse genannt-.

Die Telegramme enthalten in einem ersten Adreßbyte die Nummer der L-Adresse und in einem zweiten Adreßbyte die Nummer der G-Adresse.

Die Nummer der L-Adresse und die Nummer der G-Adresse werden bei der Adressierung eines Ortungsbereichs einheitlich - vom Master aus gesehen - den Geräten in aufsteigender Reihenfolge als Adressen zugeordnet.

Alle Adressen werden in dezimaler Form angegeben und sind im Telegramm binär codiert.

Zur manuellen Adreßzuweisung wird einem Gerät, das keine Adressen eingespeichert hat, von einem Personalcomputer 8 aus, der über die PC-Schnittstelle an das Gerät angeschlossen ist, per Befehlstelegramm eine L-Adresse und G-Adresse zugeordnet.

Bei der automatischen Adreßzuweisung sind die Geräte eines Ortungsabschnittes nach Inbetriebnahme im Speicherbetrieb. Wird nur die Teilstrecke in Betrieb genommen, so ist nicht auszuschließen, daß Geräte anderer Teilstrecken im Normalbetrieb sind. Deshalb werden vor der automatischen Adressierung per Befehlstelegramm alle Geräte in den Speicherbetrieb geschaltet. Der Befehl zur automatischen Adressierung aller Geräte eines Ortungsbereichs kann über die Tastatur eines Personalcomputers 8, der über die PC-Schnittstelle an einem der Geräte (Master oder Slave) angeschlossen ist oder von einem Anzeige- und Bedienmodul aus abgegeben werden.

Die automatische Adressierung mit Adressierstart vom Master wird durch Eingabe über die Tastatur eines am Master angeschlossenen Personalcomputers 8 gestartet. Über die PC-Schnittstelle sendet der Personalcomputer 8 daraufhin ein Befehlstelegramm an den Master mit dem Befehl "Start Adressierung".
Der Master sendet ein Befehlstelegramm
- mit der Adresse 255 in den ersten beiden Adreßbytes (Aufruf an alle Geräte) und
- mit dem Befehl "Gehe in den Speicherbetrieb"

zu allen Slaves der Strecke.

Danach beginnt der Master die Adressierung mit dem Aussenden eines weiteren Befehlstelegramms mit dem Adressierbefehl.

Dieses Befehlstelegramm mit der Adresse 255 in den ersten beiden Adreßbytes und der eigenen L- und G-Adresse in den beiden weiteren Adreßbytes wird zum nächsten Slave gesendet.

Die Zwischenregeneratoren 2 innerhalb eines Leitungsabschnitts 4 und das Leitungsendgerät 3 am Ende - vom Master aus gesehen - eines Leitungsabschnitts 4 erhalten das Befehlsdiagramm mit dem Adressierbefehl über den Telemetriekanal. Sie übernehmen folgendes in ihren Adreßspeicher:
- den Adreßvorschlag im dritten Adreßbyte als eigene L-Adresse und
- dem um Eins erhöhten Adreßvorschlag im vierten Adreßbyte als eigene G-Adresse.

Anschließend setzen sie in das dritte und vierte Adreßbyte des empfangenen Befehlstelegramms den Inhalt des eigenen Adreßspeichers ein und senden das geänderte Befehlstelegramm über den unidirektionalen Telemetriekanal des Zwischengenerators 2 bzw. den bidirektionalen ISM-Bus des Leitungsendgeräts 3 zum nächsten Gerät.

Die Leitungsendgeräte 1 am Anfang - vom Master aus gesehen - des zweiten und jedes weiteren Leitungsabschnitts 4 erhalten das Befehlstelegramm mit dem Adressierbefehl über den bidirektionalen ISM-Bus. Sie übernehmen den um Eins erhöhten Adreßvorschlag im dritten Adreßbyte als eigene L-Adresse und das mit der Adresse von z. B. 001 überschriebene vierte Adreßbyte als eigene G-Adresse in ihren Adreßspeicher.

Anschließend setzen sie in das dritte und vierte Adreßbyte des empfangenen Befehlstelegramms den Inhalt des eigenen Adreßspeichers ein und senden das geänderte Befehlstelegramm über den Telemetriekanal zum nächsten Gerät.
Dieser Vorgang wird fortgesetzt, bis alle Geräte des Ortungsbereichs adressiert sind.

Damit ist die Adressierphase der Geräte abgeschlossen. Danach beginnt der Master den ersten Pollzyklus und schaltet dabei die Geräte in den Normalbetrieb um.

Die automatische Adressierung kann auch von einem Slave aus durch Eingabe über die Tastatur eines an diesem Slave angeschlossenen Personalcomputers 8 oder eines Anzeige- und Bedienmoduls gestartet werden. Der Personalcomputer 8 sendet ein Befehlstelegramm an den Slave mit dem Befehl "Start Adressierung". Der Slave sendet danach in dem hierfür vorgesehenen Zeitintervall nach einem Pollzyklus oder, wenn er innerhalb einer Wartezeit von etwa 3 Sekunden kein Aufruftelegramm empfängt, ein Befehlstelegramm mit dem Befehl "Start Adressierung" an den Master.

Der Slave sendet dieses Befehlstelegramm nur in einer Richtung aus, für den Fall daß ein Pollzyklus vorher abgelaufen ist, wird dabei das Telegramm in die Richtung ausgesendet, in der der Master angeordnet ist, der den Pollzyklus veranlaßt hat. Für den Fall, daß kein Pollzyklus vorangegangen ist, wird eine beliebige Senderichtung gewählt. Erhält der betreffende Slave kein Adressierungstelegramm innerhalb einer Zeit von 3 s, dann wird die Aussendung des Befehlstelegramms in der anderen Übertragungsrichtung wiederholt.

Ein zweiter Master kann aber auch vom Slave aus gesehen in der gleichen Übertragungsrichtung wie der erste Master auftreten. In diesem Falle würde zunächst durch zeitlich unterschiedlicher Aussendung des Befehlstelegramms in zwei unterschiedliche Übertragungsrichtungen der zweite Master nicht ausgeschieden werden können. Die Master sind deshalb zusätzlich so ausgebildet, daß jeder Master, der den Pollzyklus eines anderen Masters empfängt, einen von einem Slave ausgehenden Adressierungswunsch nicht selbst ausführt, sondern an den anderen Master weiterleitet, der dann die Adressierung vornimmt.

Nach erfolgter Adressierung sind immer noch beide Master vorhanden, sodaß der zweite zunächst nicht adressierende Master die Adressierung des ersten Masters stören kann. Deshalb ist vorgesehen, daß nach der von einem ersten Master vorgenommenen Adressierung dieser auch dann in seinem Modus verbleibt, wenn er von einem zweiten Master Befehlstelegramme erhält. Außerdem schaltet nach der von einem ersten Master vorgenommenen automatischen Adressierung ein zweiter Master nach Empfang von Befehlstelegrammen vom ersten Master in den Modus eines Slave um. Zusätzlich meldet das Gerät bei späteren Aufrufen in seinen Antworttelegrammen, daß es als Master eingestellt ist, aber im Modus eines Slaves arbeitet.

## Patentansprüche

1. Verfahren zur automatischen Adressierung von zur Überwachung und/oder Steuerung in einem digitalen Nachrichtenübertragungssystem enthaltenen Prozessoreinheiten, bei dem im normalen Betrieb mit Adressen versehene Prozessoreinheiten über ein Telegrammübertragungsnetz derart Informationen miteinander austauschen können, daß Abfragetelegramme von einer als Master eingestellten Prozessoreinheit und andere Telegramme von als Slaves eingestellten Prozessoreinheiten übertragen werden, wobei der Master in einer Adressierungsphase an Slaves adressierte Telegramme aussendet und diese veranlaßt, jeweils eine individuelle Adresse anzunehmen,
wobei ein Slave auf einen von außen ankommenden Befehl hin überprüft, ob ein auch als Pollzyklus bezeichneter Aufrufzyklus abläuft und bei einer Erkennung eines derartigen Zyklus die Richtung feststellt, in der der den Pollzyklus verursachender Master angeordnet ist und am Ende des Pollzyklus seinen Adressierungswunsch nur in die Richtung dieses Masters übermittelt,
und bei Fehlen eines Pollzyklus der Slave zunächst in die eine Übertragungsrichtung seinen Adressierungswunsch aussendet und eine angemessene Zeit den Adressierungsvorgang abwartet und bei fehlenden Adressierungsvorgang nach dieser Zeit seinen Adressierungswunsch in die andere Übertragungsrichtung absendet.

2. Verfahren nach Patentanspruch 1,
**dadurch gekennzeichnet,**
daß die angemessene Zeit wenigstens 3 s beträgt.

3. Verfahren nach Ansprüchen 1 oder 2,
**dadurch gekennzeichnet**,
daß ein Master, der den Pollzyklus eines anderen Masters empfängt, den von einem Slave ausgehenden Adressierungswunsch nicht selbst ausführt, sondern an den anderen Master weiterleitet, der die Adressierung vornimmt.

4. Verfahren nach einem der Ansprüche 1 bis 3,
**dadurch gekennzeichnet**,
daß nach der von einem ersten Master vorgenommenen automatischen Adressierung dieser auch dann in seinem Modus verbleibt, wenn er von einem zweiten Master Befehlstelegramme erhält.

5. Verfahren nach einem der Ansprüche 1 bis 3,
**dadurch gekennzeichnet**,
daß nach der von einem ersten Master vorgenommenen automatischen Adressierung ein zweiter Master nach Empfang von Befehlstelegrammen des ersten Masters in den Modus eines Slave umschaltet.

6. Verfahren nach Anspruch 1,
**dadurch gekennzeichnet**,
daß der von außen ankommende Befehl von einem Personalcomputer erzeugt wird.

## Claims

1. Method for the automatic addressing of processor units for monitoring and/or control contained in a digital communication system, in which during normal operation processor units that are provided with addresses can exchange information with one another via a telegram transmission network in such a way that interrogation telegrams are transmitted from a processor unit set as master and other telegrams are transmitted from processor units set as slaves, in which the master transmits telegrams addressed to slaves in an addressing phase and causes the latter to accept an individual address in each case, wherein, in response to an instruction arriving from outside, a slave checks whether a calling cycle, also referred to as polling cycle, is being executed and, if such a cycle is detected, determines the direction in which the master originating the polling cycle is situated, and at the end of the polling cycle transmits its addressing request only in the direction of said master, and if a polling cycle is missing, the slave transmits its addressing request first of all in the one transmission direction and waits an appropriate amount of time for the addressing operation, and if the addressing operation is missing after this time transmits its addressing request in the other transmission direction.

2. Method according to Patent Claim 1, characterized in that the appropriate amount of time is at least 3 s.

3. Method according to Claims 1 or 2, characterized in that a master that receives the polling cycle of another master does not execute the addressing request originating from a slave itself, but rather forwards it to the other master, which performs the addressing.

4. Method according to one of Claims 1 to 3, characterized in that, after the automatic addressing performed by a first master, the latter remains in its mode even if it receives instruction telegrams from a second master.

5. Method according to one of Claims 1 to 3, characterized in that, after the automatic addressing performed by a first master, a second master switches over into the mode of a slave after receiving instruction telegrams of the first master.

6. Method according to Claim 1, characterized in that the instruction arriving from outside is generated by a personal computer.

## Revendications

1. Procédé d'adressage automatique d'unités à processeur contenus, pour le contrôle et/ou la commande, dans un système numérique de transmission d'informations, et selon lequel, dans le fonctionnement normal, des unités à processeur, pourvues d'adresses, peuvent échanger entre elles des informations par l'intermédiaire d'un réseau de transmission de télégrammes de telle sorte que des télégrammes d'interrogation sont transmis par une unité à processeur réglée en tant que maître, et d'autres télégrammes sont transmis par des unités à processeur réglées en tant qu'esclaves, le maître émettant, pendant une phase d'adressage, des télégrammes adressés à des esclaves et amenant ces derniers à recevoir respectivement une adresse individuelle, et selon lequel
lors de l'arrivée d'une instruction à partir de l'extérieur, un esclave vérifie si un cycle d'appel également désigné sous le terme de cycle d'interrogation, se déroule et, dans le cas de l'identification d'un tel cycle, détermine la direction, dans laquelle est disposé le maître qui déclenche le cycle d'interrogation, et, à la fin du cycle d'interrogation, retransmet son désir d'adressage uniquement en direction de ce maître, et
dans le cas de l'absence d'un cycle d'interrogation, l'esclave émet tout d'abord son désir d'adressage, dans ladite direction de transmission, et attend le processus d'adressage pendant une durée appropriée, et dans le cas où il n'y a pas de processus d'adressage, émet, après cet intervalle de temps, son désir d'adressage dans l'autre direction de transmission.

2. Procédé suivant la revendication 1, caractérisé par le fait que la durée appropriée est égale à au moins 3 s.

3. Procédé suivant la revendication 1 ou 2, caractérisé par le fait qu'un maître qui reçoit le cycle d'interrogation d'un autre maître, n'exécute pas de lui-même le désir d'adressage partant d'un esclave, mais le retransmet à l'autre maître, qui exécute l'adressage.

4. procédé suivant l'une des revendications 1 à 3, caractérisé par le fait qu'après l'adressage automatique réalisé par un maître, ce dernier reste également dans son mode lorsqu'il reçoit des télégrammes d'instructions de la part d'un second maître.

5. Procédé suivant l'une des revendications 1 à 3, caractérisé par le fait qu'après l'adressage automatique réalisé par un maître, un second maître est commuté dans le mode esclave après la réception de télégrammes d'instructions du premier maître.

6. Procédé suivant la revendication 1, caractérisé par le fait que l'instruction qui arrive de l'extérieur, est produite par un ordinateur personnel.
